# EUROPEAN PATENT APPLICATION

(11) **EP 1 980 668 A1**
(43) Date of publication of application: **15.10.2008**
(21) Application number: 08004758.2
(22) Date of filing: 14.03.2008
(51) Int. Cl.: E01H 1/08, B01D 46/54

(54) **Road sweeping machine including an improved filter device**

(30) Priority: 13.04.2007 IT MI20070750
(71) Applicant: Dulevo International s.p.a., 43012 Fontanellato (MI) (IT)
(72) Inventor: Tagliaferri, Fabrizio, 43030 Trescasali (Parma) (IT)
(74) Representative: Lunati, Vittoriano

(57) **Abstract**

There is disclosed a road sweeping machine (1) including a filter device (6) and comprising: movement means (2), suitable to allow movement of the road sweeping machine (1), collection means (3), suitable to allow collection of refuse and air including pollutants from the outside environment, a container (4), suitable to contain the refuse and the pollutants, means (5) for conveying the air from the container (4) to the outside environment and wherein the filter device (6) is suitable to filter the air conveyed from the conveying means (5) and comprises a filter layer (7) having a filter membrane (7a) provided with a first membrane (7b) made of polytetrafluoroethylene.

## Description

The present invention relates to a road sweeping machine including a filter device of the type claimed in the preamble of Claim 1.

There are currently known different road sweeping machines suitable to sweep or wash roads, squares, public places, vast indoor spaces and the like.

These road sweeping machines are appropriately self-propelled and comprise means for driving and to house a driver.

They are provided with a mechanical and/or pneumatic collection system, suitable to collect refuse and polluting substances from the outside environment, an internal container, suitable to contain the refuse and pollutants collected, and a filter device, suitable to filter the pollutants collected and to prevent re-emission thereof into the outside environment.

These sweeping machines are of increasing importance, as they allow a reduction in the presence of pollutants in the outside environment.

For this purpose, the presence of an efficient filter device is fundamental.

In particular, membrane filter devices, which allow considerable energy saving and high output, are preferred.

They can be realized by a filter layer, i.e. in fabric or cloth, through which a flow of air containing the particles of pollutant passes.

Said layer is therefore substantially suitable to retain the particles of pollutant and to allow the flow of air to pass towards the outside environment.

The aforesaid known art has some important drawbacks.

In fact, it has been seen that the efficiency of devices with filter membrane is not sufficiently high.

It has also been found that after a prolonged period of use, the functionality of known devices with filter layer is greatly reduced.

This reduction in efficiency is principally due to the fact that the filter element remains clogged by the accumulation of polluting substances therewithin, consequently preventing correct passage of the air flow.

This last drawback is only partly lessened by cleaning of the filter devices, as not all the particles of pollutant are discharged after correct cleaning.

As a result, these known filter layers require to be replaced periodically, resulting in a considerable increase in costs and manpower.

Another important drawback is given by the fact that the filter devices fitted in road sweeping machines are frequently subject to tears and breakages.

These are due to the presence of refuse, such as small stones or the like, which can be erroneously conveyed through the filters.

In this situation the technical aim of the present invention is to devise a road sweeping machine including an improved filter device capable of substantially overcoming the aforesaid drawbacks.

Within said technical aim, an important object of the invention is to realize a road sweeping machine including a filter device capable of retaining a high quantity of pollutants.

Another important object is to obtain a road sweeping machine including a filter device having a high duration in time and with use.

A further object of the invention is to realize a road sweeping machine including a filter device suitable to allow simple and effective cleaning thereof.

Last but not least object of the invention is to devise a road sweeping machine including a filter device that is not subject to breakages or tears caused by the refuse conveyed.

The technical aim and the objects specified are achieved by a road sweeping machine including a filter device as described in Claim 1.

Preferred embodiments of the invention are shown by way of example in the accompanying drawings. In particular:
**Fig. 1** shows a road sweeping machine according to the invention;
**Fig. 2** shows the section III-III of a detail of the filter device according to the invention;
**Fig. 3** represents the section II-II of the filter device according to the invention; and

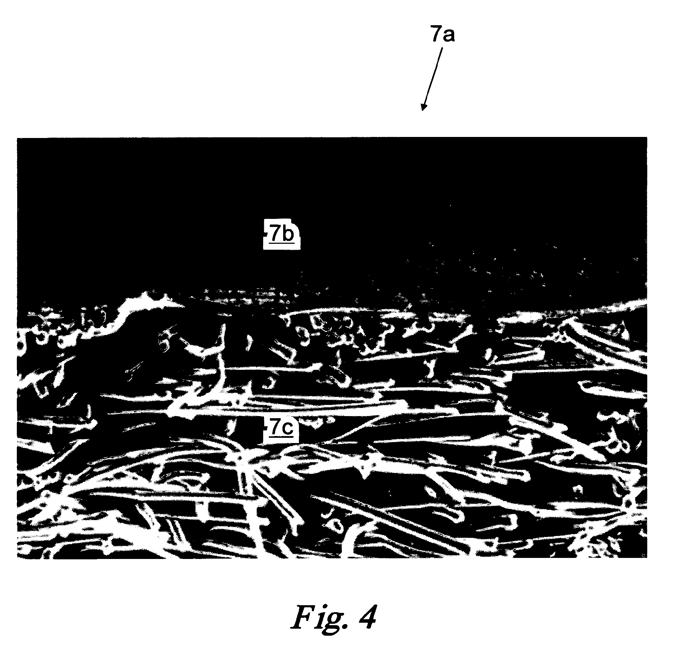

**Fig. 4** is a photograph showing an enlargement of a detail of the device according to the invention.

With reference to the Figures, the road sweeping machine according to the invention is indicated as a whole with the number **1.**

It comprises movement means **2,** realized by an engine, wheels and drive means and suitable to allow movement of this vehicle 1.

It also comprises collection means **3,** suitable to allow the collection of refuse and pollutants from the outside environment, a container **4,** suitable to contain said refuse and pollutants, means **5** for conveying the air from the container **4** to the outside environment, and finally a filter device **6** suitable to filter the air discharged into the outside environment so as to retain the pollutants inside this container **4.**

In particular, the collection means 3, known per se, are realized by specific brushes and by pneumatic devices and/or mechanical conveyor belts, augers or the like, so as to allow collection of refuse and conveying of the air including the pollutants from the outside environment to the container 4.

This container 4 is appropriately realized by a box-shaped casing, made of metal or the like, suitable to contain said refuse and pollutants until they are deposited in a specific dump or the like.

The road sweeping machine 1 also comprises means 5 for conveying the air present inside the container 4 towards the outside environment, so as to realize a cycle to purify this air from the pollutants.

In fact, before being discharged from said conveying means 5 into the outside environment, the air present inside the container 4 is appropriately filtered by the specific filter device 6, so that the pollutants contained in this air are retained inside the container 4.

For this purpose, the conveying means 5 is preferably realized by one or more fans disposed on an outside wall of the container **4** and the filter device 6 is positioned in proximity of said fans.

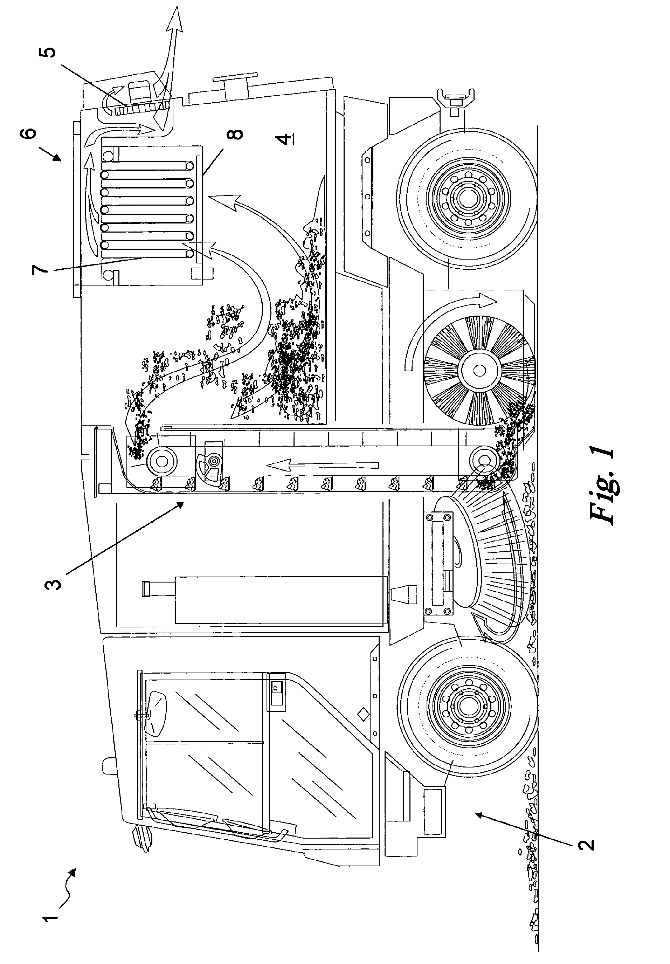

A particular arrangement of the conveying means 5 and of the filter device 6 is shown by way of example in Fig. 1.

The filter device 6 comprises a filter layer **7,** including a filter membrane **7a** suitable to retain the pollutants when a flow of air including these pollutants passes therethrough.

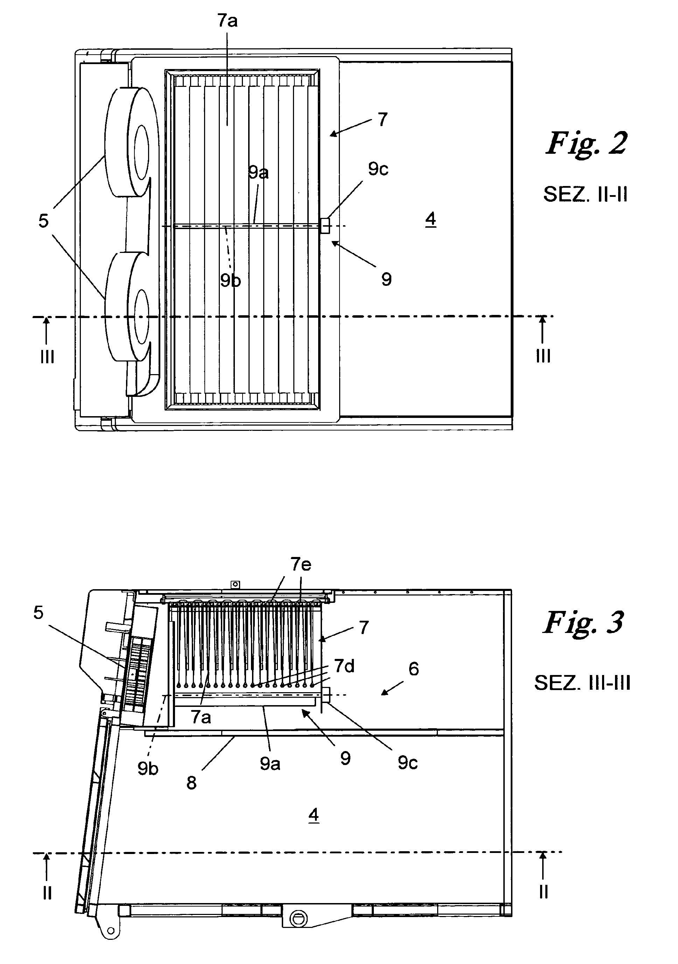

In particular, the filter device 6 is realized by a bag filter. It comprises a filter layer 7 composed of a filter membrane 7a having approximately the same width as the container **4** (Fig. 2a) and disposed folded in a plurality of bags constrained, in the upper part, to a plurality of supporting rods **7d** and, in the lower part, to tension rods **7e,** having the function of maintaining said filter membrane 7a in tension.

Alternatively, the filter device 6 is realized by a sleeve filter.

An example of said bag filter is shown in Figs. 2a and 2b . These figures show a filter including nineteen bags and having a total length of approximately 6 dm and a total width of approximately 16 dm.

The filter layer 7 comprises said filter membrane 7a realized by a first membrane **7b** made of polytetrafluoroethylene, and in particular expanded polytetrafluoroethylene, adjacent to a second membrane **7c** made of felt of the like.

In particular, said first membrane 7b is facing the inside of the container 4. Therefore it is first to come into contact with the pollutants and refuse present in the air about to be discharged from the container 4.

Moreover, it appropriately has a morphological structure comprising a microstructure of knots interconnected by yarns that form a structural mesh including voids and pores formed between the knots and the fibers. Said yarns are also disposed appropriately in substantially parallel directions.

The second membrane 7c instead has the aim of retaining the pollutants passing through said first membrane 7b.

It is appropriately realized by needle felt made of polymer material, and preferably a polyester such as polyethylene terephthalate.

In particular, the second membrane 7c has a thickness in the order of magnitude of millimeters, while the first membrane 7b has a thickness of less than one millimeter.

Fig. 3 shows a magnification of the filter membrane 7a.

The filter device 6 appropriately also comprises a system **9** for cleaning the filter layer 7.

It is preferably realized by a cleaning system 9 by shaking, realized by a rod element **9a,** made to rotate about an axis **9b,** in a longitudinal direction, by an electric motor **9c.**

This rod element 9b is eccentric with respect to the rotation axis 9b and is positioned in proximity of the filter layer 7 and in particular of the tension rods 7e, so that at least a portion of said rod 9a, having a greater distance from the rotation axis 9b is in interference with the filter layer 7.

The filter device 6 appropriately also comprises a selection filter **8** suitable to prevent refuse with dimensions of a few cubic centimeters from being conveyed to the filter membrane 7a.

In particular, the selection filter 8 can be constituted simply by a metal grate having slits in the order of magnitude of a centimeter.

Operation of the road sweeping machine 1 with the above-described structural design is as follows.

The road sweeping machine 1 is activated and moved through the movement means 2, and is conveyed along the areas to be swept.

Refuse disposed in the outside environment in proximity of this road sweeping machine 1 is collected by means of the specific collection means 3, as is the air containing pollutants.

Said refuse is then disposed inside the container 4, while the conveying means 5 convey the air sucked in through the filter device 6 and discharge it to the outside environment.

Then, prior to being discharged from the container 4, the air is filtered through the selection filter 8 and subsequently through the filter device 6, including the filter membrane 7a.

More in particular, the air including the pollutants passes in succession through the selection filter 8, the first membrane 7b, and the second membrane 7c and is then discharged into the outside environment.

During operation of the road sweeping machine 1, the cleaning system 9 is also activated.

In particular, the rod element 9a is made to rotate about the axis 9b so as to strike, with each rotation, the tension rods 7e and to shake the filter layer 7.

The invention achieves important advantages.

In fact, it has been evaluated that the filter membrane 7a, composed of the described first and second membrane 7b and 7c, allows optimal filtering of pollutants.

According to a test performed with a road sweeping machine known with the trade name Dulevo 5000 and equipped with the described filter device 6, it has been evaluated that the same filter device 6 retains more than 99% of the pollutants having a diameter equal to or less than 10 µm, known with the notation PM₁₀, and a percentage in the region of 67% of pollutants having a diameter equal to or less than 2.5 µm (PM_{2.5}).

Moreover, it has been found that this filter membrane 7a allows a high flow rate of air in relation to the quantity of filtered substances.

A further important advantage of the filter membrane 7a is realized by the fact that the first membrane 7b made of expanded polytetrafluoroethylene prevents the majority of pollutants from entering the filter membrane 7a.

This feature achieves the important advantage of preventing clogging of this membrane 7a. Moreover, as the majority of pollutants remain disposed on the surface, cleaning of this filter membrane 7a is very simple, fast and efficient.

In particular, the cleaning system 9 allows continuous detachment of the pollutants from the filter membrane 7a.

Consequently, the filter device 6 maintains a high level of efficiency even after frequent and prolonged use.

Yet another advantage is given by the fact that the first membrane 7b made of polytetrafluoroethylene has a high mechanical strength. Consequently, it is very rarely damaged by refuse conveyed thereto.

Moreover, the presence of the selection filter 8 prevents refuse of larger dimensions from reaching the filter membrane 7a, further reducing the risk of damage of this filter membrane 7a.

## Claims

1. Road sweeping machine (1) including an improved filter device (6) and comprising: movement means (2), suitable to allow movement of said road sweeping machine (1), collection means (3), suitable to allow collection of refuse and air including pollutants from the outside environment, a container (4), suitable to contain said refuse and pollutants, means (5) for conveying the air from said container (4) to the outside environment and **characterized in that**: said filter device (6), suitable to filter the air conveyed from said conveying means (5), comprises a filter layer (7) including a filter membrane (7a) provided with a first membrane (7b) made of polytetrafluoroethylene.

2. Machine according to Claim 1, wherein said first membrane (7b) is made of expanded polytetrafluoroethylene.

3. Machine according to Claim 2, wherein said first membrane (7b) has a microstructure of knots interconnected by yarns.

4. Machine according to Claim 3, wherein said first membrane (7b) has a microstructure of knots interconnected by yarns disposed substantially in parallel directions.

5. Machine according to one or more of the preceding Claims, wherein said filter membrane (7a) comprises a second membrane (7c), adjacent to said first membrane (7b).

6. Machine according to Claim 5, wherein said second membrane (7c) is made of needle felt in polymer material.

7. Machine according to Claims 5 or 6, wherein said filter membrane (7a) is disposed with said first membrane (7a) facing said container (4), so that said air flow passes in succession through said first membrane (7b) and said second membrane (7c).

8. Machine according to one or more of the preceding Claims, wherein said filter layer (7) is realized by a bag filter.

9. Machine according to one or more of the preceding Claims, wherein said filter device (6) includes a selection filter (8) suitable to filter the air conveyed towards said membrane filter (7).

10. Machine according to Claim 9, wherein said selection filter (8) is realized by a metal grate.
